# EUROPÄISCHE PATENTANMELDUNG

(11) **EP 3 960 413 A1**
(43) Veröffentlichungstag der Anmeldung: **02.03.2022**
(21) Anmeldenummer: 20193964.2
(22) Anmeldetag: 01.09.2020
(51) Int. Cl.: B29C 33/72, B29C 45/17, B29C 48/27, B29B 7/72, B29B 7/00, B29B 7/80, B29B 7/90, B29B 7/94, C11D 3/20, C11D 3/28, C11D 3/30, C11D 3/32, C11D 3/37, C11D 7/26, C11D 7/32, C11D 11/00

(54) **REINIGUNGSZUSAMMENSETZUNG FÜR EXTRUDER UND SPRITZGUSSMASCHINEN**

(71) Anmelder: Fidan, Mesut, 35423 Lich (DE)
(72) Erfinder: Fidan, Mesut, 35423 Lich (DE)
(74) Vertreter: Viering, Jentschura & Partner mbB Patent- und Rechtsanwälte

(57) **Zusammenfassung**

Die vorliegende Erfindung betrifft eine Reinigungszusammensetzung für Extruder und Spritzgussmaschinen auf Basis eines thermoplastischen Trägermaterials und enthaltend das Produkt der Umsetzung mindestens einer Verbindung umfassend mindestens zwei primäre oder sekundäre Aminogruppen und mindestens einer Carbonsäure-Verbindung, Verfahren zur Herstellung derartiger Zusammensetzungen, die Verwendung derartiger Zusammensetzungen zur Reinigung eines Extruders sowie Verfahren zur Reinigung einer Spritzgussmaschine oder eines Extruders.

## Beschreibung

Die vorliegende Erfindung betrifft eine Reinigungszusammensetzung für Extruder und Spritzgussmaschinen auf Basis eines thermoplastischen Trägermaterials und enthaltend das Produkt der Umsetzung mindestens einer Verbindung umfassend mindestens zwei primäre oder sekundäre Aminogruppen und mindestens einer Carbonsäure-Verbindung, Verfahren zur Herstellung derartiger Zusammensetzungen, die Verwendung derartiger Zusammensetzungen zur Reinigung eines Extruders sowie Verfahren zur Reinigung einer Spritzgussmaschine oder eines Extruders.

Im Bereich der Kunststoffverarbeitung hat die Häufigkeit des Farb- und/oder Harzaustausches innerhalb der Formmaschinen stark zugenommen.

Um Verunreinigungen, d.h. Harzrückstände, welche nach Verarbeitung eines Harzes in der Formmaschine verbleiben, zu entfernen, bieten sich folgende, grundsätzlich verschiedene Herangehensweisen an:
Im Zuge der mechanischen Reinigung werden die verunreinigten Komponenten einer jeweiligen Verarbeitungs- und Formgebungsanlage (beispielsweise Schnecke und Zylinder im Falle eines Schneckenextruders; Kolben und Zylinder im Falle eines Kolbenextruders; Zylinder und Düse im Falle einer Spritzgussmaschine) komplett oder teilweise ausgebaut und mit Hilfe von Bürsten oder ähnlichem mechanisch gereinigt, wahlweise unter Zuhilfenahme zumeist Tensid- und/oder Lösemittel-haltiger Reinigungsmittel, deren Zusammensetzung je nach Art des vorherig verarbeiteten Harzes entsprechend gewählt und variiert werden kann.

Alternativ dazu besteht die Möglichkeit, sogenannte Reinigerharze zu verwenden und diese zwecks Reinigung der jeweiligen Anlage zu extrudieren / spritzzugießen. Dies erübrigt das De- und Remontieren der jeweiligen Anlage und ermöglicht vergleichsweise unkomplizierte Farb- und/oder Harzwechsel. Je nach Effizienz des verwendeten Reinigerharzes müssen jedoch sowohl Einsatzmenge als auch -dauer angepasst, d.h. im schlechteren Falle erhöht werden, um den gewünschten Effekt, d.h. möglichst geringe farbliche Abweichung und/oder geringen Einschluss von Fremdkomponenten im nachfolgend prozessierten Harz und letztendlich resultierendem Extrudat/Formteil zu erzielen. Die Qualität eines Reinigungsharzes wird dabei nicht nur in Hinblick auf seine generelle Reinigungseffizienz bewertet, sondern bestimmt sich darüber hinaus anhand des Ausmaßes und der Hartnäckigkeit von Rückständen, die das Reinigerharz selbst in der Anlage zurücklässt. Ein weiteres Qualitätsmerkmal eines Reinigerharzes, welches allgemein als Materialverträglichkeit bezeichnet werden kann, besteht darin, die jeweilig zu reinigende Anlage, d.h. Anlagenkomponenten, welche mit dem Reinigerharz in Kontakt kommen, materialtechnisch zu schonen. Beispielsweise kann ein hoher Anteil an abrasiv wirkenden Harzkomponenten zu Materialschäden an der Anlage führen.

Unter Berücksichtigung sowohl ökonomischer als auch ökologischer Aspekte besteht nach wie vor Bedarf an möglichst effizienten und ökologisch unbedenklichen Reinigungszusammensetzungen für Extruder und Spritzgussanlagen.

Gelöst wird diese Aufgabe durch eine Reinigungszusammensetzung für Extruder und Spritzgussmaschinen auf Basis thermoplastischer Trägermaterialien und enthaltend das Produkt der Umsetzung mindestens einer Verbindung umfassend mindestens zwei primäre oder sekundäre Aminogruppen und mindestens einer Carbonsäure-Verbindung, welche eine überraschend gute Reinigungsleistung und -effizienz aufweist.

Ein erster Gegenstand der vorliegenden Erfindung ist daher eine Reinigungszusammensetzung für Extruder und Spritzgussmaschinen enthaltend mindestens ein thermoplastisches Trägermaterial, dadurch gekennzeichnet, dass die Zusammensetzung mindestens ein Reaktionsprodukt der Umsetzung mindestens einer Verbindung umfassend mindestens zwei primäre oder sekundäre Aminogruppen und mindestens einer Carbonsäure-Verbindung umfasst.

In einem weiteren Aspekt betrifft die Erfindung auch ein Verfahren zur Herstellung einer Reinigungszusammensetzung für Extruder und Spritzgussmaschinen, wie hierin definiert, umfassend die folgenden Schritte:
a) Bereitstellen einer Mischung enthaltend das Trägermaterial, mindestens eine Verbindung umfassend mindestens zwei primäre oder sekundäre Aminogruppen, mindestens eine Carbonsäure-Verbindung und gegebenenfalls weitere Additive;
b) Einspeisen der Mischung erhalten in Schritt a) in einen Extruder; und
c) Extrudieren der Mischung,
dadurch gekennzeichnet, dass das Reaktionsprodukt der Umsetzung mindestens einer Verbindung umfassend mindestens zwei primäre oder sekundäre Aminogruppen und mindestens einer Carbonsäure-Verbindung *in situ* erzeugt wird.

In noch einem Aspekt betrifft die Erfindung auch die Verwendung einer Reinigungszusammensetzung für Extruder und Spritzgussmaschinen, wie hierin definiert, zur Reinigung eines Extruders oder einer Spritzgussmaschine.

Schließlich betrifft die vorliegende Erfindung auch ein Verfahren zur Reinigung einer Spritzgussmaschine oder eines Extruders, umfassend mindestens einen Schritt des Durchspülens der jeweiligen Anlage mit mindestens einer Reinigungszusammensetzung, wie hierin definiert.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, schließt ein, ist aber nicht begrenzt auf 1, 2, 3, 4, 5, 6 und mehr. Bezogen auf einen Inhaltsstoff bezieht sich die Angabe auf die Art des Inhaltsstoffs und nicht auf die absolute Zahl der Moleküle. "Mindestens ein Trägermaterial" bedeutet somit beispielsweise mindestens eine Art von Trägermaterial, d.h. dass eine Art von Trägermaterial oder eine Mischung mehrerer verschiedener Trägermaterialien gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Wenn hierin auf Molmassen Bezug genommen wird, beziehen sich diese Angaben immer auf die zahlenmittlere Molmasse Mₙ, sofern nicht explizit anders angeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.
**Abbildung 1** zeigt eine Prüfplatte vor und nach dem Einfärben mit Deltacolor F PE 10669-EC2/300.

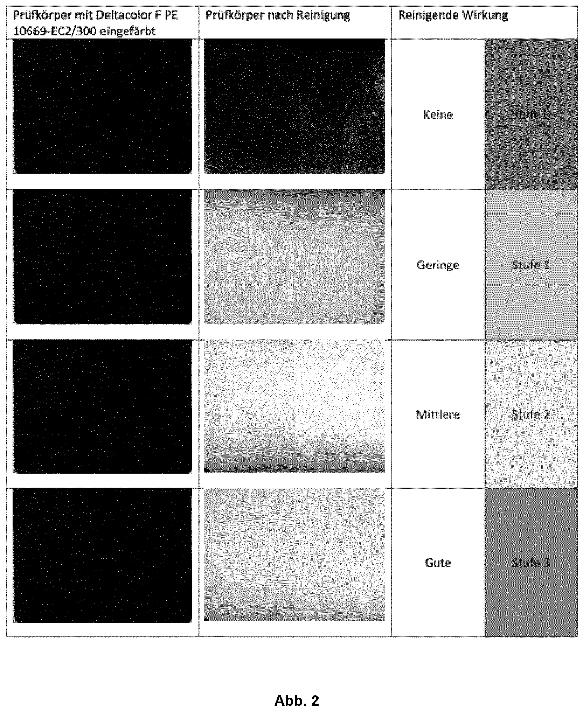

**Abbildung 2** zeigt die Auswertungsskala zur Einstufung der Reinigungsleistung anhand von Prüfkörpern (Platten) unterschiedlichen Reinheitsgrades.

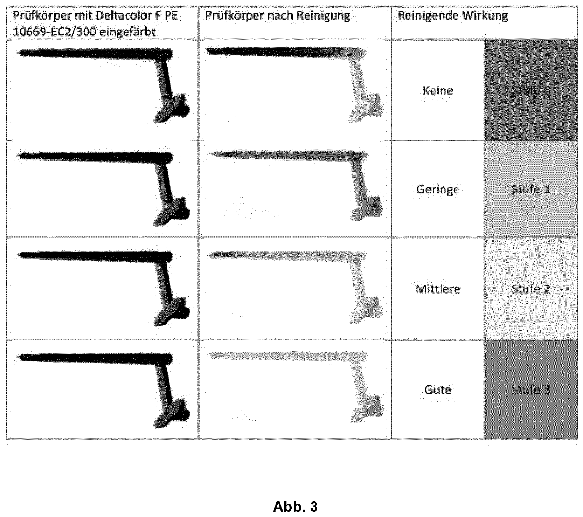

**Abbildung 3** zeigt die Auswertungsskala zur Einstufung der Reinigungsleistung anhand von Prüfkörpern (Stege) unterschiedlichen Reinheitsgrades.

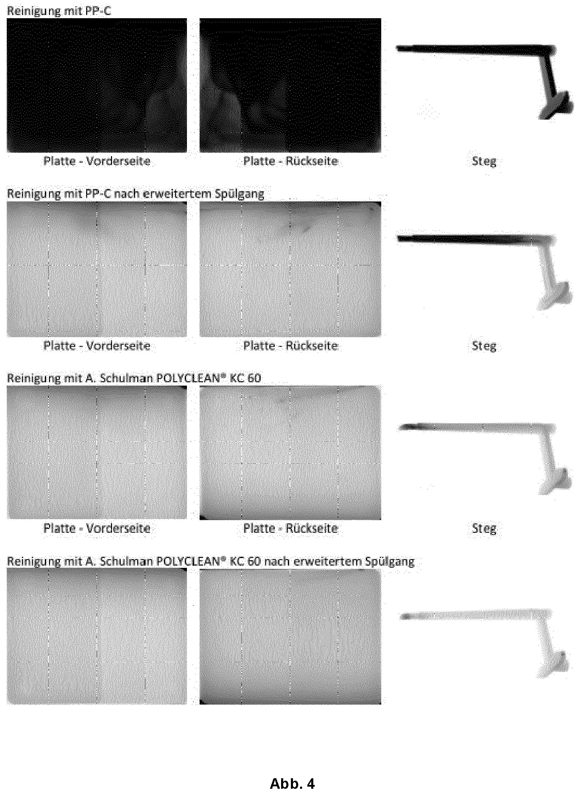

**Abbildung 4** zeigt die Fotodokumentation der in Reinigungstests mit erfindungsgemäßen Reinigungszusammensetzungen und Vergleichsreinigungszusammensetzungen erzielten Reinigungsergebnisse an Prüfplatten und -stegen (Teil 1).

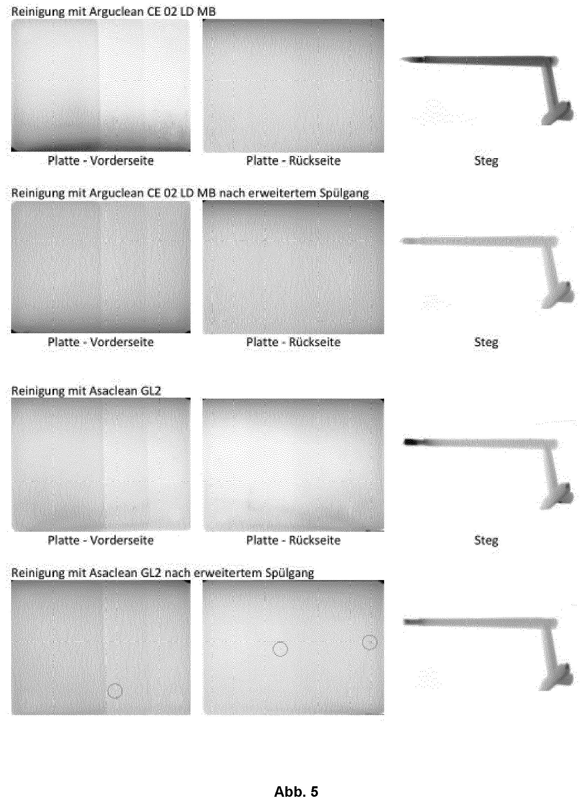

**Abbildung 5** zeigt die Fotodokumentation der in Reinigungstests mit erfindungsgemäßen Reinigungszusammensetzungen und Vergleichsreinigungszusammensetzungen erzielten Reinigungsergebnisse an Prüfplatten und -stegen (Teil 2).

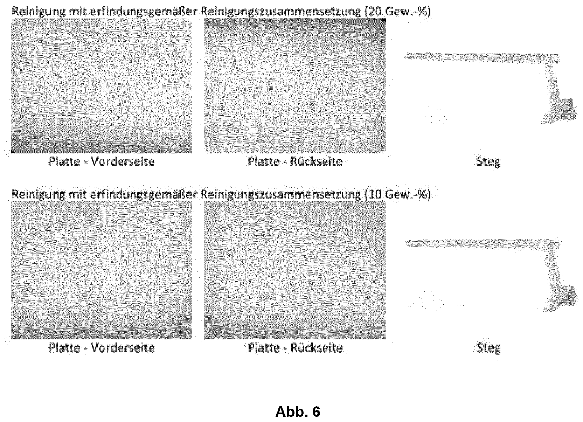

**Abbildung 6** zeigt die Fotodokumentation der in Reinigungstests mit erfindungsgemäßen Reinigungszusammensetzungen und Vergleichsreinigungszusammensetzungen erzielten Reinigungsergebnisse an Prüfplatten und -stegen (Teil 3).

Erfindungsgemäße Reinigungszusammensetzungen für Extruder und Spritzgussmaschinen enthalten, als Basiskomponente, mindestens ein thermoplastisches Trägermaterial.

Als Trägermaterial eignen sich, im Kontext der vorliegenden Erfindung, thermoplastische Materialen, welche prinzipiell geeignet zur Verwendung in Extrusions- und Spritzgussverfahren sind. Beispielhaft seien in diesem Zusammenhang, ohne als Einschränkung verstanden werden zu wollen, insbesondere lineares Polyethylen niedriger Dichte (LLDPE), Polyethylen niedriger Dichte (LDPE), Polyethylen mittlerer Dichte (MDPE), Polyethylen hoher Dichte (HDPE), Polyethylen mit ultrahohem Molekulargewicht (UHMWPE), Styrol-Ethylen/Butylen-Styrol-Blockcopolymere (SEBS), Ethylen-Octen-copolymerisierte Polyolefin-Elastomere (POE), Ethylen-Penten-copolymerisiertes POE, Homo-Polypropylen (HOPP), Co-Polypropylen (COPP), Mischungen aus HOPP und COPP, Polystyrol (PS), Polyphenylensulfide (PPS), Polyphenylenoxide (PPO), thermoplastische Polyurethane (TPU), Polyamide (PA), beispielsweise PA6, PA11, PA12, PA66, PA610, PA612, PA1010 und PA1212, Polyvinylchloride (PVC), Poly(methyl)methacrylate (P(M)MA), Polyvinylbutyrale (PVB), Polycarbonate (PC) und Cyclische Olefin Copolymer (COC) sowie Mischungen der vorgenannten genannt.

In verschiedenen Ausführungsformen enthält die erfindungsgemäße Reinigungszusammensetzung weniger als 10 Gew.-% Melaminharz, vorzugsweise weniger als 5 Gew.-% Melaminharz, noch bevorzugter weniger als 1 Gew.-% Melaminharz. In verschiedenen Ausführungsformen ist eine erfindungsgemäße Reinigungszusammensetzung insbesondere im Wesentlichen frei von Melaminharz. "Im Wesentlichen frei von Melaminharz" bezeichnet, im Kontext der vorliegenden Erfindung, eine Zusammensetzung, welche nicht mehr als 0,1 Gew.-% Melaminharz, vorzugsweise nicht mehr als 0,05 Gew.-% Melaminharz, insbesondere nicht mehr als 0,01 Gew.-% Melaminharz enthält. In einigen Ausführungsformen ist eine erfindungsgemäße Reinigungszusammensetzung gänzlich frei von Melaminharz. Der Begriff "Melaminharz" bezieht sich, im Kontext der vorliegenden Erfindung, auf polymere Verbindungen basierend auf Kondensationsprodukten von Melamin mit Formaldehyd, wahlweise in Kombination mit Harnstoff und/oder Phenol, schließt also auch modifizierte Melaminharze mit ein. Insbesondere bezieht sich der Begriff "Melaminharz" jedoch nicht auf Produkte der Umsetzung mindestens einer Verbindung umfassend mindestens zwei primäre oder sekundäre Aminogruppen und mindestens einer Carbonsäure-Verbindung, wie nachfolgend definiert und beschrieben.

In verschiedenen Ausführungsformen handelt es sich bei dem thermoplastischen Trägermaterial um ein thermoplastisches Trägermaterial ausgewählt aus der Gruppe bestehend aus linearem Polyethylen niedriger Dichte (LLDPE), Polyethylen niedriger Dichte (LDPE), Polyethylen mittlerer Dichte (MDPE), Polyethylen hoher Dichte (HDPE), Polyethylen mit ultrahohem Molekulargewicht (UHMWPE), und Mischungen der vorgenannten. In einigen Ausführungsformen handelt es sich bei dem thermoplastischen Trägermaterial um lineares Polyethylen niedriger Dichte (LLDPE).

Das Molekulargewicht des thermoplastischen Trägermaterials, bzw. des thermoplastischen Polyethylen-Trägermaterials gemäß einiger Ausführungsformen, unterliegt keinen besonderen Beschränkungen, liegt jedoch vorzugsweise und gemäß einiger Ausführungsformen im Bereich von ungefähr 1.000 bis ungefähr 500.000, beispielsweise ungefähr 1.000, 2.000, 3.000, 5.000, 10.000, 20.000, 30.000, 40.000, 50.000, 60.000, 70.000, 80.000, 90.000, 10.000, 110.000, 150.000, 200.000, 250.000, 300.000, 350.000, 400.000, 450.000, oder 500.000, noch bevorzugter im Bereich von ungefähr 3.000 bis ungefähr 100.000, beispielsweise ungefähr 3.000, 3.500, 4.000, 4.500, 5.000, 10.000, 11.000, 12.000, 13.000, 14.000, 15.000, 16.000, 17.000, 18.000, 19.000, 20.000, 25.000, 30.000, 35.000, 40.000, 45.000, 50.000, 55.000, 60.000, 65.000, 70.000, 75.000, 80.000, 85.000, 90.000, 95.000 oder 100.000.

In verschiedenen Ausführungsformen beträgt die Molmassenverteilung Q, bestimmt anhand Messen der zahlenmittleren Molmasse Mₙ, und der massenmittlere Molmasse M_{w}, wie hierin definiert, gemäß Q = M_{w}/Mₙ, 1.0 bis 10.0, vorzugsweise 1.0 bis 7.0, insbesondere 1.0 bis 5.0.

Das Trägermaterial kann in einer Menge von bis zu ungefähr 90 Gew.-%, gemäß einiger Ausführungsformen in einer Menge von ungefähr 40 bis ungefähr 90 Gew.-%, beispielsweise ungefähr 40, 41, 42, 43, 44, 45, 46, 47, 48, 49, 59, 51, 52, 53, 54, 55, 56, 57, 58, 59, 60, 65, 70, 75, 76, 77, 78, 79, 80, 81, 82, 83, 84, 85, 86, 87, 88, 89 oder 90 Gew.-%, vorzugsweise ungefähr 45 bis ungefähr 85 Gew.-%, noch bevorzugter ungefähr 50 bis ungefähr 80 Gew.-%, am meisten bevorzugt ungefähr 55 bis ungefähr 75 Gew.-%, beispielsweise ungefähr 55, 60, 61, 62, 63, 64, 65, 67, 68, 69, 70, 71, 72, 73, 74 oder 75 Gew.-%, jeweils bezogen auf das Gesamtgewicht der Zusammensetzung, in der Reinigungszusammensetzung enthalten sein.

Je nach Art und Zusammensetzung des Harzes, dessen Rückstände es aus der zu reinigenden Anlage zu entfernen gilt, kann auch die Art, Zusammensetzung und Menge des in der erfindungsgemäßen Reinigungszusammensetzung enthaltenen Trägermaterials angepasst und variiert werden. Darüber hinaus kann das Trägermaterial besonders bevorzugt auch in Hinblick auf Art und Zusammensetzung des Harzes, welches die jeweilige Anlage im Anschluss an die Reinigung unter Verwendung der erfindungsgemäßen Reinigungszusammensetzung durchlaufen soll, angepasst werden. Wird beispielsweise ein LD-PE/LLD-PE-Harz im Anschluss an einen jeweiligen Reinigungsschritt zur Herstellung beliebiger Artikel, beispielsweise Folien, verwendet, kann es von Vorteil sein, eine erfindungsgemäße Reinigungszusammensetzung enthaltend ein Trägermaterial, wie vorangehend definiert und beschrieben, enthaltend, basierend auf oder bestehend aus LD-PE und/oder LLD-PE zu verwenden. Darüber hinaus können, in verschiedenen Ausführungsformen, insbesondere vergleichsweise zähe Harze vorteilhaft als Trägermaterial für erfindungsgemäße Reinigungszusammensetzungen Anwendung finden, da vergleichsweise zähe Polymere, d.h. Polymere mit niedriger MFR (meltmass-flow rate), selbst Spül- und Reinigungseffekte zu erzielen vermögen.

Eine weitere Komponente der erfindungsgemäßen Reinigungszusammensetzung ist das Reaktionsprodukt der Umsetzung mindestens einer Verbindung umfassend mindestens zwei primäre oder sekundäre Aminogruppen und mindestens einer Carbonsäure-Verbindung.

Bei den Verbindungen umfassend mindestens zwei primäre oder sekundäre Aminogruppen, welche im Kontext der vorliegenden geeignet sind, handelt es sich um Verbindungen, welche in ihrer Grundstruktur mindestens zwei Aminogruppen, unabhängig voneinander ausgewählt aus primären und sekundären Aminogruppen, enthalten. In verschiedenen Ausführungsformen handelt es sich bei derartigen Verbindungen um kleine Kohlenwasserstoff-basierte Moleküle, enthaltend vorzugsweise weniger als 50, noch bevorzugter weniger als 20 Kohlenstoffatome. Als Beispiele derartiger Verbindungen seien im Kontext der vorliegenden Erfindung, ohne Einschränkung, Harnstoff; N-Alkyl oder N-Phenylsubstituierte Harnstoffderivate (Alkyl = lineares oder verzweigtes C₁-C₅ Alkyl); Kondensationsprodukte von Harnstoff, insbesondere Triuret, Guanidin und Melamin; Kondensationsprodukte von Harnstoff mit weiteren Verbindungen, wie beispielsweise Glycoluril; sowie Melamin-Derivate, wie beispielsweise Acetoguanamin und Benzoguanamin, genannt. In verschiedenen Ausführungsformen kann es sich bei der mindestens einen Verbindung umfassend mindestens zwei primäre oder sekundäre Aminogruppen auch um eine polymere Verbindung handeln.

In verschiedenen Ausführungsformen handelt es sich bei der Verbindung umfassend mindestens zwei primäre oder sekundäre Aminogruppen, wie voranstehend definiert, um eine Verbindung enthaltend nicht mehr als 5 Aminogruppen ausgewählt aus der Gruppe bestehend aus primären und sekundären Aminogruppen. In einigen Ausführungsformen handelt es sich bei einer solchen Verbindung um eine Verbindung, wie voranstehend definiert, enthaltend ausschließlich primäre Aminogruppen oder ausschließlich sekundäre Aminogruppen, vorzugsweise ausschließlich primäre Aminogruppen. In verschiedenen Ausführungsformen enthält eine solche Verbindung vorzugsweise nicht mehr als 4, noch bevorzugter nicht mehr als 3 primäre Aminogruppen.

In verschiedenen Ausführungsformen handelt es sich bei der Amino-Verbindung, wie voranstehend definiert, um Melamin oder ein Melamin-Derivat, vorzugsweise um eine Verbindung ausgewählt aus der Gruppe von Verbindungen bestehend aus Melamin, Acetoguanamin und Benzoguanamin. Der Begriff "Melamin-Derivat", wie hierin verwendet, bezeichnet im Kontext der vorliegenden Erfindung eine Verbindung, in deren Melamin-Grundgerüst eine Aminogruppe gegen eine wahlweise C₁-C₅ Alkyl-substituierte Phenylgruppe oder eine lineare oder verzweigte C₁-C₈, vorzugsweise C₁-C₅ Alkylgruppe ausgetauscht ist. In bevorzugten Ausführungsformen handelt es sich bei der Verbindung umfassend mindestens zwei primäre oder sekundäre Aminogruppen, wie voranstehend definiert, um Melamin.

Bei Carbonsäure-Verbindungen, welche im Kontext der vorliegenden Erfindung Anwendung finden können, handelt es sich prinzipiell um Kohlenwasserstoff-basierte Monocarbonsäuren, d.h. Verbindungen enthaltend eine Carbonsäure-Funktionalität, sowie Kohlenwasserstoff-basierte Verbindungen enthaltend mehr als eine, beispielsweise zwei, drei, vier oder fünf Carbonsäurefunktionalitäten, mit anderen Worten beispielsweise, aber ohne Einschränkung, um Dicarbonsäure-Verbindungen und Tricarbonsäure-Verbindungen, insbesondere um Dicarbonsäure-Verbindungen und Tricarbonsäureverbindungen. In verschiedenen Ausführungsformen ist eine Carbonsäure-Verbindung, wie hierin definiert, ausgewählt aus der Gruppe bestehend aus Monocarbonsäuren, Dicarbonsäuren und Tricarbonsäuren.

Carbonsäure-Verbindungen, welche im Kontext der vorliegenden Erfindung geeignet sind, sind Kohlenwasserstoff-basierte Verbindung, welche in ihrer Grundstruktur folglich mindestens eine Carbonsäuregruppe enthalten. In verschiedenen Ausführungsformen handelt es sich dabei insbesondere um Verbindungen enthaltend nicht mehr als 100 Kohlenstoffatome, vorzugsweise nicht mehr als ungefähr 50 Kohlenstoffatome, vorzugsweise nicht mehr als ungefähr 40 Kohlenstoffatome, noch bevorzugter nicht mehr als 35 Kohlenstoffatome, insbesondere nicht mehr als 30 Kohlenstoffatome, am meisten bevorzugt nicht mehr als 25 Kohlenstoffatome. In verschiedenen anderen Ausführungsformen kann es sich bei einer geeigneten Carbonsäureverbindung auch um eine polymere Verbindung handeln.

Im Kontext der vorliegenden Erfindung schließt der Begriff "Carbonsäure-Verbindung" lineare sowie cyclische (Hetero)Alkan- und (Hetero)Alkencarbonsäuren sowie (hetero)aromatische Carbonsäuren ein. Heteroatome schließen, im Kontext der vorliegenden Erfindung, O, N, S, P und Si ein, vorzugsweise O, N und S.

Nicht-einschränkende Beispiele für Monocarbonsäuren sind, im Kontext der vorliegenden Erfindung, Ethansäure (Essigsäure), Propensäure (Acrylsäure), Butansäure (Buttersäure), (9Z)-Ectadec-9-ensäure (Ölsäure), Benzencarbonsäure (Benzoesäure), 2-(1-Naphthyl)essigsäure, Pyrridin-3-carbonsäure (Nicotinsäure) und Pyrrolidin-2-carbonsäure (L-Prolin).

Nicht-einschränkende Beispiele für Dicarbonsäuren sind, im Kontext der vorliegenden Erfindung, Ethandisäure (Oxalsäure), Propandisäure (Malonsäure), (2Z)-But-2-endisäure (Maleinsäure), Butandisäure (Bernsteinsäure), *trans*-Butendisäure (Fumarsäure), Pentandisäure (Glutarsäure), Hexandisäure (Adipinsäure), Heptandisäure (Pimelinsäure), Octandisäure (Suberinsäure), Nonandisäure (Azelainsäure), Decandisäure (Sebacinsäure), Undecandisäure, Dodecandisäure, Tridecandisäure (Brassylsäure), Tetradecandisäure, Hexadecandisäure (Thapsiasäure), 1,2-Benzoldicarbonsäure (Phthalsäure), 1,3-Benzoldicarbonsäure (Isophthalsäure) und 1,4-Benzoldicarbonsäure (Terephthalsäure).

Nicht-einschränkende Beispiele für Tricarbonsäuren sind, im Kontext der vorliegenden Erfindung, 2-Hydroxypropan-1,2,3-tricarbonsäure (Citronensäure), 1,2,3-Propantricarbonsäure, 1,2,3-Benzoltricarbonsäure (Hemimellitsäure), 1,2,4-Tricarboxybenzol (Trimellitsäure) und 1,3,5-Tricarboxybenzol (Trimesinsäure).

Ein nicht-einschränkendes Beispiel für Carbonsäure-Verbindungen mit mehr als drei Carbonsäurefunktionalitäten ist Benzolhexacarbonsäure (Mellitsäure).

Im Kontext der vorliegenden Erfindung ebenfalls geeignet und damit als unter die Bezeichnung "Carbonsäure-Verbindung" fallend zu verstehen sind weiterhin lineare oder verzweigte Alkyl-, Alkenyl-, Alkinyl- sowie (Alkyl-substituierte) Phenylester, beispielsweise, aber ohne Einschränkung, Methyl-, Ethyl-, *n*-Propyl-, *iso*-Propyl-, Cyclopropyl-, *n*-Butyl-, *iso*-Butyl, *sec*-Butyl, *tert*-Butyl, *n*-Pentyl-, sec-Pentyl-, 3-Pentyl-, 2-Methylbutyl-, 3-Methylbutyl-(*iso*-Pentyl oder *iso*-Amyl), 3-Methylbut-2-yl-, 2-Methylbut-2-yl-, 2,2-Dimethylpropyl- (Neopentyl) und ähnliche Ester, einer entsprechenden Carbonsäure, einschließlich einfach- und mehrfach-Ester entsprechender Verbindungen. Nicht-einschränkende Beispiele für Carbonsäureester, welche im Kontext der vorliegenden Erfindung als unter die Bezeichnung "Carbonsäure-Verbindung" fallend zu verstehen sind, sind Methylacetat (Essigsäuremethylester), Ethylacetat (Essigsäureethylester), n-Butylacetat (Essigsäure-*n*-butylester), *iso*-Butylacetat (Essigsäureisobutylester), sec-Butylacetat (Essigsäure-sec-butylester), *tert*-Butylacetat (Essigsäure-*tert*-butylester), Methylhexanoat (Hexansäuremethylester), Ethylhexanoat (Hexansäureethylester), Hexandisäurediethylester (Adipinsäurediethylester), generell Triglyceride, wie beispielsweise Glycerintriacetat (Triacetin) und 1,2,3-Propantriyl-tributanoat (Tributtersäureglycerinester), und 4-Hydroxybenzoesäurepropylester.

Auch geeignet sind Derivate der vorgenannten Gruppen von Carbonsäuren, wobei Derivate in diesem Kontext verzweigte Alkan- und Alkencarbonsäuren sowie Alkyl- und/oder Alkenyl-substituierte aromatische Carbonsäuren bezeichnet, wobei es sich bei den jeweiligen Alkyl-Substituentengruppen unabhängig voneinander vorzugsweise um lineare, verzweigte oder cyclische C₁-C₁₀ Alkylgruppen, insbesondere lineare oder verzweigte C₁-C₅ Alkylgruppen, und bei den Alkenyl-Substituentengruppen vorzugsweise um lineare oder verzweigte C₂-C₁₀ Alkenylgruppen, insbesondere um lineare oder verzweigte C₂-C₅ Alkenylgruppen handelt. Weiterhin können entsprechende Verbindungen zusätzlich substituiert sein mit ein oder mehreren Substituenten ausgewählt aus der Gruppe bestehend aus -OH, =O und -NH₂, vorzugsweise -OH.

Nicht-einschränkende Beispiele für entsprechend substituierte Monocarbonsäure-Verbindungen sind 2-Hydroxybenzencarbonsäure (Salicylsäure) und 10-Hydroxy-2-Decensäure.

Nicht-einschränkende Beispiele für entsprechend substituierte Dicarbonsäure-Verbindungen sind 2-Hydroxypropandisäure, 2,3-Dihydroxybutandisäure, 2-Hydroxybutandisäure, 2-Oxopentandisäure, Oxobutandisäure, 2-Aminopentandisäure und 2-Aminobutandisäure.

Nicht-einschränkende Beispiele für entsprechend substituierte Tricarbonsäure-Verbindungen sind 2-Hydroxypropan-1,2,3-tricarbonsäure (Citronensäure) und 2-Hydroxynonadecan-1,2,3-tricarbonsäure (Agaricinsäure).

In verschiedenen Ausführungsformen handelt es sich bei einer im Kontext der vorliegenden Erfindung geeigneten Carbonsäureverbindung vorzugsweise um eine Dicarbonsäure-Verbindung.

In verschiedenen Ausführungsformen handelt es sich bei der Dicarbonsäure-Verbindung vorzugsweise um eine Alkandicarbonsäure, deren Alkylkette wahlweise substituiert ist mit einem oder mehreren Substituenten, wie voranstehend definiert, insbesondere ausgewählt aus linearen oder verzweigten, unsubstituierten Alkyl- und Alkenylgruppen, vorzugsweise Alkylgruppen, wie jeweils voranstehend definiert. In verschiedenen Ausführungsformen ist eine solche Dicarbonsäure-Verbindung ausgewählt aus der Gruppe bestehend aus Ethandisäure (Oxalsäure), Propandisäure (Malonsäure), Butandisäure (Bernsteinsäure), Pentandisäure (Glutarsäure), Hexandisäure (Adipinsäure), Heptandisäure (Pimelinsäure), Octandisäure (Suberinsäure), Nonandisäure (Azelainsäure), Decandisäure (Sebacinsäure), Undecandisäure, Dodecandisäure, Tridecandisäure (Brassylsäure), Tetradecandisäure und Hexadecandisäure (Thapsiasäure).

In verschiedenen Ausführungsformen ist die mindestens eine Carbonsäure-Verbindung, wie voranstehend definiert, insbesondere ausgewählt aus der Gruppe bestehend aus Butandisäure, Pentandisäure, Hexandisäure, Heptandisäure, Octandisäure, Nonandisäure und Decandisäure, noch bevorzugter aus der Gruppe bestehend aus Pentandisäure, Hexandisäure, Heptandisäure und Octandisäure. In einigen Ausführungsformen handelt es sich bei der Carbonsäure-Verbindung um Adipinsäure.

In verschiedenen Ausführungsformen handelt es sich bei dem Produkt der Umsetzung mindestens einer Verbindung umfassend mindestens zwei primäre oder sekundäre Aminogruppen, wie voranstehend definiert, und mindestens einer Carbonsäure-Verbindung, wie voranstehend definiert, um das Produkt der Umsetzung von Melamin mit Adipinsäure.

Bei dem Produkt der Umsetzung mindestens einer Verbindung umfassend mindestens zwei primäre oder sekundäre Aminogruppen, wie voranstehend definiert, und mindestens einer Carbonsäure-Verbindung, wie voranstehend definiert, handelt es sich, in verschiedenen Ausführungsformen der vorliegenden Erfindung, um eine Verbindung, welche aus der Reaktion mindestens einer Verbindung umfassend mindestens zwei primäre oder sekundäre Aminogruppen und mindestens einer Carbonsäure-Verbindung unter Abspaltung von einem Molekül Wasser pro Einzelreaktion von Amino- und Carbonsäuregruppe hervorgeht.

In verschiedenen anderen Ausführungsformen handelt es sich bei dem Produkt der Umsetzung mindestens einer Verbindung umfassend mindestens zwei primäre oder sekundäre Aminogruppen, wie voranstehend definiert, und mindestens einer Carbonsäure-Verbindung, wie voranstehend definiert, um eine Verbindung, welche aus der Reaktion mindestens einer Verbindung umfassend mindestens zwei primäre oder sekundäre Aminogruppen und mindestens einer Carbonsäure-Verbindung hervorgeht, wobei kein Molekül Wasser pro Einzelreaktion von Amino- und Carbonsäuregruppe abgespalten worden ist. Mit anderen Worten handelt es sich bei einer solchen Verbindung um das Produkt der Säure-Base-Reaktion nach Brønsted.

In verschiedenen Ausführungsformen umfasst eine Reinigungszusammensetzung, wie hierin beschrieben, eine Mischung der vorgenannten Produktvarianten, d.h. mindestens ein Kondensationsprodukt, wie voranstehend definiert, und mindestens ein Produkt der entsprechenden Säure-Base-Reaktion nach Brønsted, wie voranstehend definiert.

In verschiedenen Ausführungsformen handelt es sich bei dem Produkt der Umsetzung mindestens einer Verbindung umfassend mindestens zwei primäre oder sekundäre Aminogruppen, wie voranstehend definiert, und mindestens einer Carbonsäure-Verbindung, wie voranstehend definiert, um ein polymeres Produkt.

In verschiedenen Ausführungsformen handelt es sich bei dem Produkt der Umsetzung mindestens einer Verbindung umfassend mindestens zwei primäre oder sekundäre Aminogruppen, wie voranstehend definiert, und mindestens einer Carbonsäure-Verbindung, wie voranstehend definiert, nicht um ein polymeres Produkt.

In verschiedenen Ausführungsformen beträgt der Gehalt des Produktes mindestens einer Verbindung umfassend mindestens zwei primäre oder sekundäre Aminogruppen, wie voranstehend definiert, und mindestens einer Carbonsäure-Verbindung, wie voranstehend definiert, bis zu 60 Gew.-%. Beispielsweise kann es in einer Menge von ungefähr 5 bis ungefähr 50 Gew.-%, zum Beispiel in einer Menge von ungefähr 5, 6, 7, 8, 9, 10, 11, 12, 13, 14, 15, 16, 17, 18, 19, 20, 25, 30, 35, 40, 45 oder 50 Gew.-%, vorzugsweise ungefähr 10 bis ungefähr 40 Gew.-%, beispielsweise ungefähr 10,5, 11,5, 12,5, 13,5, 14,5, 15,5, 16,5, 17,5, 18,5, 19,5, 20,5, 21, 22, 23, 24, 25, 26, 27, 28, 29, 30, 31, 32, 33, 34, 35, 36, 37, 38, 39 oder 40 Gew.-%, noch bevorzugter ungefähr 15 bis ungefähr 35 Gew.-%, am meisten bevorzugt in einer Menge von ungefähr 17 bis 30 Gew.-%, jeweils bezogen auf das Gesamtgewicht der Zusammensetzung, in der erfindungsgemäßen Reinigungszusammensetzung enthalten sein.

In verschiedenen Ausführungsformen umfasst eine erfindungsgemäße Reinigungszusammensetzung darüber hinaus mindestens ein nicht-umgesetztes Edukt der Reaktion mindestens einer Verbindung umfassend mindestens zwei primäre oder sekundäre Aminogruppen und mindestens einer Carbonsäure-Verbindung. Mit anderen Worten umfasst eine erfindungsgemäße Reinigungszusammensetzung in einigen Ausführungsformen mindestens eine Verbindung umfassend mindestens zwei primäre oder sekundäre Aminogruppen, wie voranstehend definiert, und/oder mindestens eine Carbonsäure-Verbindung, wie voranstehend definiert. In verschiedenen Ausführungsformen beträgt der Gehalt einer solchen Verbindung oder Mischung derartiger Verbindungen bis zu 30 Gew.-%, vorzugsweise weniger als 15 Gew.-%, noch bevorzugter weniger als 10 Gew.-%, am meisten bevorzugt weniger als 5 Gew.-%, beispielsweise 4,9; 4,5; 4,0; 3,5; 3,0; 2,5; 2,0; 15; 1,0; 0,5; 0,4; 0,3; 0,2; 0,1; 0,09; 0,08; 0,07; 0,06; 0,05; 0,04; 0,03; 0,02; oder 0,01 Gew.-, jeweils bezogen auf das Gesamtgewicht der Reinigungszusammensetzung.

Erfindungsgemäße Reinigungszusammensetzungen können neben den vorgenannten und beschriebenen Komponenten weitere Inhaltsstoffe enthalten. In verschiedenen Ausführungsformen enthält eine erfindungsgemäße Reinigungszusammensetzung insbesondere mindestens ein weiteres Additiv ausgewählt aus der Gruppe bestehend aus Füllstoffen, Antioxidantien, Ölen, Alterungsschutzmitteln, Rheologiehilfsmittel, weiteren thermoplastischen Polymeren und wasserabweisenden Agenzien.

Füllstoffe, welche im Kontext der vorliegenden Erfindung geeignet sind, können beispielsweise, aber ohne Einschränkung, ausgewählt sein aus der Gruppe bestehend aus anorganischen Metallverbindungen von Metallen wie Silizium, Eisen, Titan, Natrium, Calcium, Chrom, Mangan, Bor, Aluminium oder ähnlichen. Beispielhaft seien in diesem Zusammenhang Oxide und Hydroxide (wie Magnesiumoxid, Calciumoxid, Zinkoxid, Manganoxid, Aluminiumoxid, Siliciumoxid, Siliciumdioxid, Aluminiumhydroxid, Magnesiumhydroxid oder dergleichen); Sulfate und Sulfide (wie Calciumsulfat, Bariumsulfat, Zinksulfid oder dergleichen); Metallsilikate (wie Magnesiumsilikat), Kalziumsilikat o.ä.); Karbide (wie Siliziumkarbid o.ä.); Mineralpulver (wie Karborumdum, Korundpulver, Talkumpuder, Kieselgur, Kaolin, Talkumpuder, Kieselerde, Sakurastein o.ä.) sowie Glasfasern (das Verhältnis L/D der Glasfaserlänge L zum Glasfaserdurchmesser D beträgt typischerweise 5000 oder weniger) genannt.

Es kann gegebenenfalls zweckmäßig sein, dass zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit als zweckmäßig erwiesen.

Die mittlere Partikelgröße entsprechender Materialien beträgt üblicherweise weniger als 150 µm, vorzugsweise weniger als 100 µm, noch bevorzugter weniger als 50 µm, am meisten bevorzugt weniger als 30 µm, beispielsweise ungefähr 1, 2, 3, 4, 5, 6, 7, 8, 9, 10, 11, 12, 13, 14, 15, 20, 21, 22, 23, 24, 25, 26, 27, 28 oder 29 µm.

Der Gesamtanteil des zugesetzten Füllstoffmaterials liegt typischerweise im Bereich von ungefähr 0,01 bis 80 Gew.-%, beispielsweise im Bereich von ungefähr 10 bis 48 Gew.-%, jeweils bezogen auf das Gesamtgewicht der Reinigungszusammensetzung.

In verschiedenen Ausführungsformen kann die Reinigungsleistung verbessert werden, wenn die Menge an Füllstoff mehr als 1 Gew.-% beträgt. In verschiedenen Ausführungsformen kann die Fließfähigkeit der Reinigungszusammensetzung verbessert werden, wenn die Menge an Füllstoffmaterial nicht mehr als 20 Gew.-% beträgt.

Als wasserabweisende Verbindungen, welche im Kontext der vorliegenden Erfindung Anwendung finden können, seien, ohne als Einschränkung verstanden werden zu wollen, synthetische Wachse wie Polyethylenwachs usw., Carnaubawachs, Silikone, Paraffine, Metallsalze höherer Fettsäuren wie Calciumstearat, Magnesiumstearat, Zinkstearat, Bleistearat usw. und Mischungen aus zwei oder mehreren der vorgenannten genannt. Der Gehalt solch wasserabweisender Verbindungen beträgt üblicherweise ungefähr 0,5 bis 15 Gew.-%, vorzugsweise ungefähr 2 bis 8 Gew.-%, jeweils bezogen auf das Gesamtgewicht der Reinigungszusammensetzung. Die wasserabweisende Verbindung, die in der Reinigungsharzzusammensetzung der vorliegenden Erfindung enthalten ist, übt eine schmierende Funktion aus und wird vorzugsweise in Kombination mit einem Füllstoffmaterial, wie voranstehend definiert, eingesetzt. In verschiedenen Ausführungsformen kann die Schmierwirkung verbessert werden, wenn die Menge an wasserabweisender Verbindung mehr als 0,5 Gew.-% beträgt, bezogen auf das Gesamtgewicht der Zusammensetzung. In verschiedenen Ausführungsformen kann das Verhältnis von Schmierwirkung zu Reinigungsleistung optimiert werden, wenn der Gehalt an wasserabweisender Verbindung 10 Gew.-% nicht übersteigt.

Als Antioxidantien, welche im Kontext der vorliegenden Erfindung vorteilhaft zur Anwendung gebracht werden können, seien solche Antioxidantien genannt, welche gewöhnlich in Kombination mit Polyolefinharzen verwendet werden, wie beispielweise phenolische Antioxidantien, Thio-Antioxidantien, und Phosphor-Antioxidantien.

Darüber hinaus kann eine erfindungsgemäße Zusammensetzung ein oder mehrere Tenside enthalten, wie beispielsweise, aber ohne Einschränkung, Natriumalkylethersulfatester, Fettsäurealkanolamide und Sulfonsäurechloride.

Rheologiehilfsmittel, welche in erfindungsgemäßen Reinigungszusammensetzungen enthalten sein könne, schließen sämtliche konventionellen Rheologiehilfsmittel ein, wie beispielsweise pyrogene Kieselsäuren, Bentone oder fibrillierte oder Pulp-Kurzfasern und hydrierte Ricinusöl-Derivate.

In einigen Ausführungsformen enthält eine erfindungsgemäße Reinigungszusammensetzung weiterhin mindestens eine Verbindung ausgewählt aus Natriumbenzoat, Kaliumbenzoat, Calciumbenzoat und Magnesiumbenzoat, deren mittlerer Teilchendurchmesser vorzugsweise 50 µm, noch bevorzugter 40 µm, insbesondere 30 µm nicht überschreitet.

In verschiedenen Ausführungsformen beträgt die Menge an Natriumbenzoat, Magnesiumbenzoat, Calciumbenzoat und/oder Kaliumbenzoat in der erfindungsgemäßen Reinigungszusammensetzung ungefähr 0,1 bis ungefähr 20 Gew.-%, beispielsweise ungefähr 0,1, 0,2, 0,3, 0,4, 0,5, 0,6, 0,7, 0,8, 0,9, 1,0, 2, 3, 4, 5, 6, 7, 8, 9, 10, 11, 12, 13, 14, 15, 16, 17, 18, 19 oder 20 Gew.%, vorzugsweise ungefähr 1 bis ungefähr 15 Gew.-%, noch bevorzugter ungefähr 3 bis ungefähr 12,5 Gew.-%, jeweils bezogen auf das Gesamtgewicht der Zusammensetzung.

Ein weiterer Aspekt der vorliegenden Erfindung betrifft Verfahren zur Herstellung einer Reinigerharzzusammensetzung, wie hierin offenbart und beschrieben.

Eine erste Verfahrensvariante zur Herstellung umfasst das Mischen der jeweiligen Komponenten, d.h. des mindestens einen Trägermaterials, des mindestens einen Produktes der Umsetzung mindestens einer Verbindung umfassend mindestens zwei primäre oder sekundäre Aminogruppen, wie hierin definiert, und mindestens einer Carbonsäure-Verbindung, wie hierin definiert, sowie weiteren Komponenten und Additiven, wie voranstehend beschrieben, vorzugsweise in einer Rühr- oder Mischvorrichtung, wobei das Mischen beispielsweise, aber ohne Einschränkung, über einen Zeitraum von ungefähr 1 Minute bis ungefähr 1 Stunde, beispielsweise ungefähr 2, 3, 4, 5, 6, 7, 8, 9, 10, 20, 30, 45, 50 oder 60 Minuten erfolgen kann.

Um das entsprechende Produkt der Umsetzung zu erhalten, kann es notwendig sein, die entsprechende Reaktandenmischung auf Temperaturen im Bereich von ungefähr 100 °C bis ungefähr 300 °C, vorzugsweise ungefähr 120 °C bis ungefähr 200 °C, beispielsweise ungefähr 120, 130, 140, 150, 160, 170, 180, 190 oder 200 °C, zu erhitzen.

Weiterhin ist es möglich, eine entsprechende Zusammensetzung beispielsweise in Form von anwenderfreundlichen Pellets oder Ähnlichem zu erhalten, wenn die entsprechende Mischung in einen Extruder eingespeist und vorzugsweise bei erhöhten Temperaturen, beispielsweise Temperaturen im Bereich von vorzugsweise ungefähr 100 °C bis ungefähr 300 °C, noch bevorzugter ungefähr 120 °C bis ungefähr 200 °C und/oder erhöhtem Druck, beispielsweise einem Druck im Bereich von vorzugsweise ungefähr 5 bar bis ungefähr 500 bar, extrudiert wird.

Weiterhin ist es möglich, eine erfindungsgemäße Zusammensetzung zu erhalten, indem die Ausgangsstoffe in eine geeignete Anlage, insbesondere einen Extruder oder eine Spritzgussanlage eingespeist werden, und als Mischung, vorzugsweise bei erhöhter Temperatur, wie voranstehend definiert, und/oder erhöhtem Druck, wie voranstehend definiert, prozessiert werden. In derartigen Ausführungsformen zur Herstellung einer erfindungsgemäßen Mischung ist entsprechend vorgesehen, dass das mindestens eine Trägermaterial, die mindestens eine Verbindung umfassend mindestens zwei primäre oder sekundäre Aminogruppen, wie hierin definiert, und die mindestens eine Carbonsäure-Verbindung, wie hierin definiert, sowie gegebenenfalls weitere Additive, wie voranstehend beschrieben, wahlweise als vorgefertigte Mischung besagter Einzelkomponenten, in eine entsprechend geeignete Anlage, wie voranstehend definiert, eingespeist werden und unter geeigneten Bedingungen, wie voranstehend definiert, prozessiert, d.h. insbesondere extrudiert oder spritzgegossen, werden, um eine erfindungsgemäße Zusammensetzung zu ergeben.

Eine solche alternative Herstellungsvariante sieht entsprechend vor, dass das mindestens eine Trägermaterial, die mindestens eine Verbindung umfassend mindestens zwei primäre oder sekundäre Aminogruppen, wie hierin definiert, und die mindestens eine Carbonsäure-Verbindung, wie hierin definiert, sowie ggf. weitere Additive, wie voranstehend beschrieben, in einen Extruder eingespeist und, vorzugsweise bei einer Temperatur im Bereich von ungefähr 100 °C bis ungefähr 300 °C, vorzugsweise ungefähr 120 °C bis ungefähr 350 °C und/oder einem Druck im Bereich von ungefähr 5 bar bis ungefähr 500 bar, vorzugsweise ungefähr 10 bar bis ungefähr 400 bar, noch bevorzugter ungefähr 10 bar bis ungefähr 350 bar, extrudiert werden.

Ein solches wie voranstehend beschriebenes erfindungsgemäßes Herstellungsverfahren zeichnet sich dadurch aus, dass das Produkt der Umsetzung mindestens einer Verbindung umfassend mindestens zwei primäre oder sekundäre Aminogruppen und mindestens einer Carbonsäure-Verbindung *in situ* generiert wird, d.h., im Kontext der vorliegenden Erfindung, im Zuge des Durchlaufens der jeweiligen Anlage, mit anderen Worten im Zuge des Extrudierens oder im Zuge des Spritzgießens.

Folglich umfasst die vorliegende Erfindung in einem weiteren Aspekt ein Verfahren zur Herstellung einer Reinigungszusammensetzung für Extruder und Spritzgussmaschinen, wie hierin definiert und beschrieben, umfassend die Schritte des:
a) Bereitstellens einer Mischung enthaltend das Trägermaterial, mindestens eine Verbindung umfassend mindestens zwei primäre oder sekundäre Aminogruppen, mindestens eine Carbonsäure-Verbindung und gegebenenfalls weitere Additive;
b) Einspeisens der Mischung erhalten in Schritt a) in einen Extruder; und
c) Extrudierens der Mischung,
dadurch gekennzeichnet, dass das Reaktionsprodukt der Umsetzung mindestens einer Verbindung umfassend mindestens zwei primäre oder sekundäre Aminogruppen und mindestens einer Carbonsäure-Verbindung *in situ* erzeugt wird, wie voranstehend definiert.

Um das entsprechende Produkt der Umsetzung zu erhalten, kann es notwendig sein, die entsprechende Reaktandenmischung auf eine Temperatur im Bereich von ungefähr 100 °C bis ungefähr 300 °C, vorzugsweise ungefähr 120 °C bis ungefähr 200 °C, beispielsweise ungefähr 120, 130, 140, 150, 160, 170, 180, 190 oder 200 °C, zu erhitzen und/oder einem Druck im Bereich von ungefähr 5 bar bis ungefähr 500 bar, vorzugsweise ungefähr 10 bar bis ungefähr 400 bar, noch bevorzugter ungefähr 10 bar bis ungefähr 350 bar, beispielsweise ungefähr 10, 11, 12, 13, 14, 15, 16, 17, 18, 19, 20, 25, 30, 35, 40, 45, 50, 55, 60, 65, 70, 75, 80, 85, 90, 95, 100, 105, 110, 115, 120, 130, 140, 150, 160, 170, 180, 190, 200, 225, 250, 275, 300, 325 oder 350 bar, auszusetzen.

Das molare Verhältnis der mindestens einen Verbindung umfassend mindestens zwei primäre oder sekundäre Aminogruppen zu der mindestens einen Carbonsäure-Verbindung beträgt üblicherweise ungefähr 1:1. Es ist allerdings ebenso möglich, die mindestens eine Verbindung umfassend mindestens zwei primäre oder sekundäre Aminogruppen, wie hierin definiert, oder aber die mindestens eine Carbonsäure-Verbindung, wie hierin definiert, in molarem Überschuss einzusetzen. In verschiedenen Ausführungsformen beträgt das Verhältnis der mindestens einen Verbindung umfassend mindestens zwei primäre oder sekundäre Aminogruppen zu der mindestens einen Carbonsäure-Verbindung daher ungefähr 0,5:1,0 bis ungefähr 1,0:0,5, vorzugsweise ungefähr 1,0:1,1 bis ungefähr 1,0:1,5 oder ungefähr 1,5:1,0 bis ungefähr 1,1:1,0.

Entsprechend betrifft die vorliegende Erfindung auch eine Reinigungszusammensetzung für Extruder und Spritzgussmaschinen, die in einem der Herstellungsverfahren, wie voranstehend definiert und beschrieben, erhältlich ist.

In einem weiteren Aspekt betrifft die vorliegende Erfindung auch die Verwendung einer Reinigungszusammensetzung, wie hierin definiert und beschrieben, zur Reinigung eines Extruders oder einer Spritzgussmaschine.

Um die gewünschten Reinigungseffekte zu erzielen, wird eine erfindungsgemäße Reinigungszusammensetzung üblicherweise in einer Menge von mindestens ungefähr 5 Gew.-% in den zu reinigenden Extruder oder in die zu reinigende Spritzgussmaschine eingespeist, wobei sich die vorgenannte Mindestmenge auf das Gesamtgewicht einer Mischung umfassend mindestens eine erfindungsgenmäße Reinigungszusammensetzung und ein thermoplastisches Harz, beispielsweise, aber ohne Einschränkung, ausgewählt aus der Gruppe bestehend aus linearem Polyethylen niedriger Dichte (LLDPE), Polyethylen niedriger Dichte (LDPE), Polyethylen mittlerer Dichte (MDPE), Polyethylen hoher Dichte (HDPE), Polyethylen mit ultrahohem Molekulargewicht (UHMWPE), Styrol-Ethylen/Butylen-Styrol-Blockcopolymere (SEBS), Ethylen-Octen-copolymerisierte Polyolefin-Elastomeren (POE), Ethylen-Penten-copolymerisiertes POE, Homo-Polypropylen (HOPP), Co-Polypropylen (COPP), Mischungen aus HOPP und COPP, Polystyrol (PS), Polyphenylensulfiden (PPS), Polyphenylenoxiden (PPO), thermoplastischen Polyurethanen (TPU), Polyamiden (PA), beispielsweise PA6, PA11, PA12, PA66, PA610, PA612, PA1010 und PA1212, Polyvinylchloriden (PVC), Poly(methyl)methacrylaten (P(M)MA), Polyvinylbutyralen (PVB), Polycarbonaten (PC) und Cyclischen Olefin Copolymeren (COC) sowie Mischungen der vorgenannten, bezieht.

Wie sich gezeigt hat, kann die Reinigungsleistung mit zunehmendem Anteil der erfindungsgemäßen Reinigungszusammensetzung in der entsprechenden Mischung verbessert werden. In einigen Ausführungsformen beträgt der Anteil an erfindungsgemäßer Reinigungszusammensetzung in einer Reinigungsbatchmischung, wie voranstehend definiert, bis zu 99,9 Gew.-%, in einigen Ausführungsformen mindestens ungefähr 10 Gew.-%, beispielsweise ungefähr 10, 11, 12, 13, 14, 15, 16, 17, 18, 19, 20, 25, 30, 35, 40, 45, 50, 55, 60, 65, 70, 75, 80, 85, 90, 95, 99 oder 99,9 Gew.-%. Entsprechend kann die hierin offenbarte und beschriebene, erfindungsgemäße Reinigungszusammensetzung, in verschiedenen Ausführungsformen, auch als Reinigungszusatz verstanden werden. Weiterhin ist es möglich, eine erfindungsgemäße Reinigungszusammensetzung ohne Beimischung eines thermoplastischen Harzes, wie voranstehend definiert, mit anderen Worten in Reinform, zu verwenden.

Das Durchspülen der jeweiligen Spritzguss- oder Extruderanlage mit einer Mischung umfassend mindestens eine erfindungsgemäße Reinigungszusammensetzung, wie voranstehend definiert, oder mit einer erfindungsgemäßen Reinigungszusammensetzung ohne zusätzlich beigemischte(s) thermoplastische(s) Harz(-mischungen) wird üblicherweise solange wiederholt, bis das Reinigungsergebnis zufriedenstellend ist, mit anderen Worten, bis nachfolgend Spritzgussartikel oder Extrudate die gewünschte Qualität aufweisen, beispielsweise geringe bis keine farbliche Abweichungen zeigen und/oder wenig bis keine Fremdmaterialeinschlüsse aufweisen.

Entsprechend betrifft die vorliegende Erfindung, in einem weiteren Aspekt, auch ein Verfahren zur Reinigung einer Spritzgussmaschine oder eines Extruders, umfassend mindestens einen Schritt des Durchspülens der jeweiligen Anlage mit mindestens einer Reinigungszusammensetzung, wie hierin definiert und beschrieben.

In verschiedenen Ausführungsformen umfasst ein solches erfindungsgemäßes Reinigungsverfahren das wiederholte Durchspülen der jeweiligen Anlage mit einer erfindungsgemäßen Reinigungszusammensetzung, wobei die Reinigungszusammensetzung nach jedem Spülschritt verworfen und eine frische Reinigungszusammensetzung für jeden neuen Spülschritt eingespeist wird.

In verschiedenen Ausführungsformen umfasst ein erfindungsgemäßes Reinigungsverfahren mindestens 1 Spülschritt, vorzugsweise mindestens 2 Spülschritte, noch bevorzugter mindestens 5 Spülschritte, noch bevorzugter mindestens 10 Spülschritte, weiter bevorzugt mindestens 15 Spülschritte, insbesondere mindestens 20 Spülschritte, beispielsweise mindestens 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 65, 70, 75 , 80, 85, 90, 95 oder 100 Spülschritte.

Die hierin offenbarten und beschriebenen erfindungsgemäßen Reinigungszusammensetzungen für Extruder und Spritzgussmaschinen ermöglichen eine effiziente, d.h. material- und zeitsparende und damit auch ökologisch vorteilhafte Reinigung von Extruder und Spritzgussanlagen. Insbesondere zeichnen sich die erfindungsgemäßen Reinigungszusammensetzungen für Extruder und Spritzgussanlagen durch eine gegenüber handelsüblichen Reinigungszusammensetzungen überlegene Reinigungsleistung sowie -effizienz aus.

Alle Sachverhalte, Gegenstände und Ausführungsformen, die für erfindungsgemäßen Mittel (Reinigungszusammensetzungen) beschrieben sind, sind auch auf die erfindungsgemäße Herstellung und deren Verwendung anwendbar. Daher wird an dieser Stelle ausdrücklich auf die Offenbarung an entsprechender Stelle verwiesen mit dem Hinweis, dass diese Offenbarung auch für die erfindungsgemäße Herstellung beziehungsweise Verwendungen gilt.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele

Für eine Reinigungsversuchsreihe (entsprechend CL-Norm 1010-1), deren Ergebnisse in untenstehenden Tabellen zusammengefasst sind, wurde eine Spritzgussanlage vor jeder Testreihe gereinigt und anschließend mit einem vergleichsweise schwer zu reinigenden, schwarzen Farbbatch unter üblichen Nutzungsbedingungen verunreinigt. Unter gleichen Parametern wurde die verunreinigte Anlage mit den jeweiligen Reinigungsbatches solange gespült, bis erneut farblose Prüfplatten hergestellt wurden.

Bei der Harzzusammensetzung Braskem PP Copo C 765-15 NA (PP-C) handelt es sich um eine kommerziell erhältliche Polypropylen-basierte Harzzusammensetzung. Bei den marktüblichen Reinigungszusammensetzungen A. Schulmann POLYCLEAN^{®} KC 60, Arguclean CE 02 LD MB und Asaclean GL2 handelt es sich um nicht-erfindungsgemäße Reinigungszusammensetzungen und damit um Vergleichszusammensetzungen.

Die Zusammensetzungen Reinigungsbatch V1 und Reinigungsbatch V2 sind erfindungsgemäß, deren Reinigungsmaterial (Reinigungszusammensetzung gemäß der vorliegenden Erfindung) jeweils folgende Zusammensetzung aufweist:
68,1 Gew.-% LLDPE
11,4 Gew.-% Adipinsäure (78 Mol)
9,5 Gew.-% Melamin (75 Mol)
9,5 Gew.-% Natriumbenzoat, mikronisiert
1,5 Gew.-% Sipernat

Reinigungsbatch V1 und Reinigungsbatch V2 unterschieden sich lediglich durch die jeweilige Einsatzmenge an Reinigungsmaterial, d.h. unterscheiden sich durch den jeweiligen Anteil an erfindungsgemäßer Reinigungszusammensetzung im letztendlich eingespeisten Reinigungsbatch.

Die Prüfreihe wurde mit einer Spritzgussanlage des Typs Demag Ergotech 25-80 System mit nachfolgenden Soll-Parametern durchgeführt, wobei der Ist-Wert, je nach Schmelzflussindex (MVR) des eingesetzten Polymers, abweichen kann:
Zykluskontrollzeit 100 s, Blockzeit 2 s, Pausezeit 0,5 s, Spritzzeit 0,19 s, Dosierzeit 40,6 s, Spritzdruck 320 bar, Einspritzgeschwindigkeit 125 mm/s, Nachdruck-Freigabe 0,5 s, Nachdruckzeit 8 s, Nachdruck 330 bar, Kühlzeit 15 s, Dosierverzögerung 0,3 s, Drehzahl 200 U/min, Staudruck 430 bar, Staudruck manuell 2 bar, Schnecke zurück 80 mm, Dosieren stop 70 mm, Massepolster 14,2 mm, PN SC-Weg 70 mm, PN Zeit 5,19, PN p_spez 2060.

### Beispiel 1: Reinigungsversuche

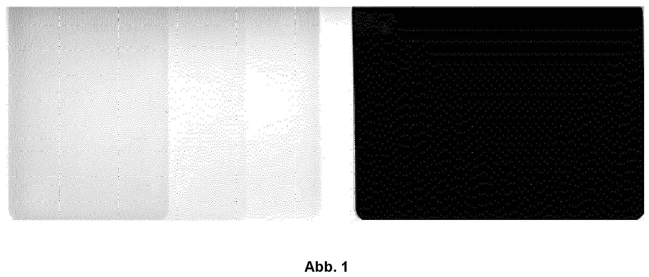

Durch das verwendete Werkzeug wurden zwei Prüfplatten, die über einen Steg miteinander verbunden sind, hergestellt. Bei Herstellung aus PP-C beträgt das Gesamtgewicht der hergestellten Prüfplatte mit Steg 16,1 g. Vor Testbeginn wurde die Anlage mit einem Gemisch bestehend aus 150 g erfindungsgemäßer Reinigungszusammensetzung obiger Formulierung und 350 g PP-C vorgespült, um mögliche Verunreinigungen zu beseitigen. Im Anschluss wurde die Anlage mit 200 g PP-C nachgespült. Die Prüfplatten waren zu Testbeginn sauber und wurden mit 200 g des schwarzen, elektrisch leitfähigen Compound Deltacolor F PE 10669-EC2/300 (23 Gew.-% Ruß in einem Gemisch aus LD-PE und LLD-PE) eingefärbt (Abb. 1).

Anschließend wurde die Spritzgussanlage mit dem jeweiligen Reinigungsmaterial gespült. Zum Reinigen wurde der Spritzgussvorgang 50-mal mit dem Reinigungsmaterial durchgeführt. Hierdurch wurde die Anlage mit ca. 804 g gespült, wobei die Menge je nach Schmelzflussindex und Dichte des verwendeten Reinigungsmaterials Schwankungen unterlag. Das Reinigungsmaterial wurde in untenstehenden Abmischungen verwendet. Anschließend wurde der Spritzgussvorgang 20-mal (entspricht ca. 321 g) mit dem Polymer PP-C durchgeführt und die Reinigungsleistung der hergestellten Platten und des Stegs durch Inaugenscheinnahme optisch bewertet. Wurde bereits zu einem früheren Zeitpunkt eine gute Reinigungsleistung auf den Platten oder dem Steg beobachtet, wurde die Prüfung mit der Anzahl der tatsächlich durchgeführten Spritzgussvorgänge beendet. Die Ergebnisse dieser Reinigungstests sind in Tabelle 1 zusammengestellt:

**Tabelle 1**

| **Reinigungsmaterial** | Braskem PP Copo C 765-15 NA (PP-C) | A. Schulmann POLYCLEAN^{®} KC 60 | Arguclean CE 02 LD MB | Asaclean GL2 | Reinigungsbatch V1 | Reinigungsbatch V2 |
|---|---|---|---|---|---|---|
| **Einsatzmenge an Reinigungsmaterial** | 100 % | 100 % | 100 % | 100 % | 10 % | 20 % |
| **Reinigungsmaterial ergänzt um** | - | - | - | - | 90 % PP-C | 80 % PP-C |
| **1. Durchspülmenge*** | 804 g | 820 g | 810 g | 830 g | 825 g | 750 g** |
| **Nachspülmenge mit PP-C** | 322 g | 324 g | 323 g | 328 g | 130 g | 130 g |
| **reinigende Wirkung auf Platten** | Stufe 0 - keine - | Stufe 2 - mittlere - | Stufe 2 - mittlere - | Stufe 2 - mittlere - | Stufe 3 - gute - | Stufe 3 - gute - |
| **reinigende Wirkung auf Steg** | Stufe 0 - keine - | Stufe 2 - mittlere - | Stufe 1 - geringe- | Stufe 2 - mittlere - | Stufe 3 - gute - | Stufe 3 - gute - |

| | | | | | | |
|---|---|---|---|---|---|---|
| * Unterschiede in der Dichte und dem Fließverhalten führen zu leichten Schwankungen. ** Aufgrund der hohen Reinigungsleistung wurde nach 45 Spritzgussvorgängen das Nachspülen gestartet. | | | | | | |

### Beispiel 2: Erweiterter Spülvorgang für Produkte mit mittlerer oder schwächerer Reinigungsleistung

Prüfplatten oder Stege, die in den Testreihen gemäß Beispiel 1 mit einer mittleren oder noch schwächeren Reinigungswirkung bewertet wurden, wurden einer weiteren Spül-Prozedur analog der ersten, bestehend aus 50 Spritzgussvorgängen mit dem Reinigungsmaterial und anschließend 20 Spritzgussvorgängen mit dem Polymer PP-C, unterzogen und die Prüfkörper anschließend beurteilt. Die Ergebnisse dieser erweiterten Spültests sind in Tabelle 2 aufgezeigt:

**Tabelle 2**

| **Reinigungsmaterial** | Braskem PP Copo C 765-15 NA (PP-C) | A. Schulmann POLYCLEAN^{®} KC 60 | Arguclean CE 02 LD MB | Asaclean GL2 |
|---|---|---|---|---|
| **Einsatzmenge an Reinigungsmaterial** | 100 % | 100 % | 100 % | 100 % |
| **2. Durchspülmenge*** | 804 g | 444g | 190 g | 700 g |
| **Nachspülmenge mit PP-C** | 828 g | 291 g | 129 g | 237 g |
| **Reinigende Wirkung auf Platten** | Stufe 1 - geringe- | Stufe 2,5 - mittlere bis gute - | Stufe 3 - gute - | Stufe 2,5 - mittlere bis gute - |
| **Reinigende Wirkung auf Steg** | Stufe 0 - keine - | Stufe 2,5 - mittlere bis gute - | Stufe 3 - gute - | Stufe 2,5 - mittlere bis gute - |

| | | | | |
|---|---|---|---|---|
| * Unterschiede in der Dichte und dem Fließverhalten führen zu leichten Schwankungen. | | | | |

Eine übersichtliche Zusammenfassung und Gegenüberstellung der Ergebnisse der Versuchsreihen der Beispiele 1 und 2 findet sich in Tabelle 3:

**Tabelle 3**

| **Reinigungsmaterial** | Braskem PP Copo C 765-15 NA (PP-C) | A. Schulmann POLYCLEAN^{®} KC 60 | Arguclean CE 02 LD MB | Asaclean GL2 | Reinigungsbatch V1 | Reinigungsbatch V2 |
|---|---|---|---|---|---|---|
| **Einsatzmenge an Reinigungsmaterial** | - | 1264 g | 1000 g | 1530 g | 82,5 g | 150 g |
| **Einsatzmenge an PP-C** | 2758 g | 615 g | 452 g | 565 g | 872,5 g | 730 g |
| **Summe der eingesetzten Materialien** | 2758 g | 1879 g | 1452 g | 2095 g | 955 g | 880 g |
| **Anzahl der Spritzgussvorgänge** | 170 | 115 | 90 | 127 | 58 | 53 |
| **Dauer der Spritzgussvorgänge [min]** | 163 | 110 | 86 | 122 | 56 | 51 |
| **reinigende Wirkung auf Platten** | Stufe 1 - geringe- | Stufe 2,5 - mittlere bis gute - | Stufe 3 - gute - | Stufe 2,5 - mittlere bis gute - | Stufe 3 - gute - | Stufe 3 - gute - |
| **reinigende Wirkung auf Steg** | Stufe 0 - keine - | Stufe 2,5 - mittlere bis gute - | Stufe 3 - gute - | Stufe 2,5 - mittlere bis gute - | Stufe 3 - gute - | Stufe 3 - gute - |

Im Allgemeinen wird mit allen getesteten Reinigungsprodukten im Vergleich zu dem pur eingesetzten Polymer (PP-C) immer eine bessere Reinigungsleistung erzielt. Die Reinigungsleistung hängt hierbei maßgeblich von der eingesetzten Menge des Reinigungsproduktes, sowie der Anzahl der Spülvorgänge ab. Hier zeigen sich deutliche Unterschiede zwischen den verschiedenen getesteten Produkten. Die erfindungsgemäße Reinigungszusammensetzung ist hinsichtlich ihrer Reinigungsleistung allen anderen Testprodukten überlegen. Eine gute Reinigungsleistung wird nicht nur schneller, sondern auch mit einer deutlich geringeren Menge an Reinigungsmaterial erreicht. Eine ähnlich gute Reinigungsleistung im Vergleichstest besitzt nur die Reinigungszusammensetzung Arguclean CE 02 LD MB, allerdings nur mit zusätzlichen Spülschritten.

## Patentansprüche

1. Reinigungszusammensetzung für Extruder und Spritzgussmaschinen enthaltend mindestens ein thermoplastisches Trägermaterial, **dadurch gekennzeichnet, dass** die Zusammensetzung mindestens ein Reaktionsprodukt der Umsetzung mindestens einer Verbindung umfassend mindestens zwei primäre oder sekundäre Aminogruppen und mindestens einer Carbonsäure-Verbindung umfasst.

2. Die Reinigungszusammensetzung gemäß Anspruch 1, **dadurch gekennzeichnet, dass** das thermoplastische Trägermaterial ausgewählt ist aus der Gruppe bestehend aus linearem Polyethylen niedriger Dichte (LLDPE), Polyethylen niedriger Dichte (LDPE), Polyethylen mittlerer Dichte (MDPE), Polyethylen hoher Dichte (HDPE), Polyethylen mit ultrahohem Molekulargewicht (UHMWPE), und Mischungen der vorgenannten.

3. Die Reinigungszusammensetzung gemäß Anspruch 1 oder 2, **dadurch gekennzeichnet, dass** das thermoplastische Trägermaterial in einer Menge von ungefähr 40 bis ungefähr 90 Gew.-%, vorzugsweise in einer Menge von ungefähr 45 bis ungefähr 85 Gew.-%, noch bevorzugter in einer Menge von ungefähr 50 bis ungefähr 80 Gew.-%, am meisten bevorzugt in einer Menge von ungefähr 55 bis ungefähr 75 Gew.-%, jeweils bezogen auf das Gesamtgewicht der Zusammensetzung, enthalten ist.

4. Die Reinigungszusammensetzung gemäß einem der Ansprüche 1 bis 3, **dadurch gekennzeichnet, dass** die Carbonsäure-Verbindung ausgewählt ist aus der Gruppe bestehend aus Monocarbonsäuren, Dicarbonsäuren und Tricarbonsäuren.

5. Die Reinigungszusammensetzung gemäß einem der Ansprüche 1 bis 4, **dadurch gekennzeichnet, dass**
- die Verbindung umfassend mindestens zwei primäre oder sekundäre Aminogruppen ausgewählt ist aus der Gruppe bestehend aus Melamin, Benzoguanamin und Acetoguanamin; und/oder
- die Carbonsäureverbindung eine Dicarbonsäure-Verbindung ist, vorzugsweise ausgewählt aus der Gruppe bestehend aus Ethandisäure, Propandisäure, Butandisäure, Pentandisäure, Hexandisäure, Heptandisäure, Octandisäure, Nonandisäure, Decandisäure, Undecandisäure, Dodecandisäure, Tridecandisäure, Tetradecandisäure und Hexadecandisäure, vorzugsweise aus der Gruppe bestehend aus Butandisäure, Pentandisäure, Hexandisäure, Heptandisäure, Octandisäure, Nonandisäure und Decandisäure, noch bevorzugter aus der Gruppe bestehend aus Pentandisäure, Hexandisäure, Heptandisäure und Octandisäure; und/oder
- das Reaktionsprodukt der Umsetzung mindestens einer Verbindung umfassend mindestens zwei primäre oder sekundäre Aminogruppen und mindestens einer Carbonsäure-Verbindung in einer Menge von ungefähr 5 bis ungefähr 50 Gew.-%, vorzugsweise ungefähr 10 bis ungefähr 40 Gew.-%, noch bevorzugter ungefähr 15 bis ungefähr 35 Gew.-%, am meisten bevorzugt in einer Menge von ungefähr 17 bis 30 Gew.-%, jeweils bezogen auf das Gesamtgewicht der Zusammensetzung, enthalten ist.

6. Die Reinigungszusammensetzung gemäß einem der Ansprüche 1 bis 5, **dadurch gekennzeichnet, dass**
- die Carbonsäure-Verbindung Hexandisäure ist; und/oder
- die Verbindung umfassend mindestens zwei primäre oder sekundäre Aminogruppen Melamin ist.

7. Die Reinigungszusammensetzung gemäß einem der Ansprüche 1 bis 6, **dadurch gekennzeichnet, dass** des Weiteren mindestens ein weiteres Additiv ausgewählt aus der Gruppe bestehend aus Füllstoffen, Antioxidantien, Ölen, Alterungsschutzmitteln, Rheologiehilfsmittel, weiteren thermoplastischen Polymeren und wasserabweisenden Agenzien enthalten ist.

8. Die Reinigungszusammensetzung gemäß einem der Ansprüche 1 bis 7, **dadurch gekennzeichnet, dass** des Weiteren mindestens eine Verbindung ausgewählt aus der Gruppe bestehend aus Natriumbenzoat, Kaliumbenzoat, Calciumbenzoat und Magnesiumbenzoat enthalten ist.

9. Die Reinigungszusammensetzung gemäß Anspruch 8, **dadurch gekennzeichnet, dass** das Natriumbenzoat, Magnesiumbenzoat, Calciumbenzoat und/oder Kaliumbenzoat
- in partikulärer Form vorliegt, vorzugsweise mit einem mittleren Teilchendurchmesser von < 30 µm; und/oder
- in einer Menge von ungefähr 0,1 bis ungefähr 20 Gew.-%, vorzugsweise ungefähr 1 bis ungefähr 15 Gew.-%, noch bevorzugter ungefähr 3 bis ungefähr 12,5 Gew.-%, jeweils bezogen auf das Gesamtgewicht der Zusammensetzung, enthalten ist.

10. Verfahren zur Herstellung einer Reinigungszusammensetzung für Extruder und Spritzgussmaschinen gemäß einem der Ansprüche 1 bis 8, umfassend die folgenden Schritte:
a) Bereitstellen einer Mischung enthaltend das Trägermaterial, mindestens eine Verbindung umfassend mindestens zwei primäre oder sekundäre Aminogruppen, mindestens eine Carbonsäure-Verbindung und gegebenenfalls weitere Additive;
b) Einspeisen der Mischung erhalten in Schritt a) in einen Extruder; und
c) Extrudieren der Mischung,
**dadurch gekennzeichnet, dass** das Reaktionsprodukt der Umsetzung mindestens einer Verbindung umfassend mindestens zwei primäre oder sekundäre Aminogruppen und mindestens einer Carbonsäure-Verbindung *in situ* erzeugt wird.

11. Verwendung einer Reinigungszusammensetzung für Extruder und Spritzgussmaschinen gemäß einem der Ansprüche 1 bis 8 zur Reinigung eines Extruders oder einer Spritzgussmaschine.

12. Verfahren zur Reinigung einer Spritzgussmaschine oder eines Extruders, umfassend mindestens einen Schritt des Durchspülens der jeweiligen Anlage mit mindestens einer Reinigungszusammensetzung gemäß einem der Ansprüche 1 bis 8.
